(19) **Europäisches Patentamt / European Patent Office / Office européen des brevets**

(11) **EP 2 416 162 A1**

(12) **EUROPEAN PATENT APPLICATION**
published in accordance with Art. 153(4) EPC

(43) Date of publication:
**08.02.2012 Bulletin 2012/06**

(51) Int Cl.:
*G01N 35/08* (2006.01)  *B01J 19/00* (2006.01)
*B81B 1/00* (2006.01)  *G01N 30/26* (2006.01)
*G01N 37/00* (2006.01)

(21) Application number: **10758642.2**

(22) Date of filing: **29.03.2010**

(86) International application number:
**PCT/JP2010/055561**

(87) International publication number:
**WO 2010/113871 (07.10.2010 Gazette 2010/40)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **31.03.2009 JP 2009085719**

(71) Applicants:
- **Shinwa Chemical Industries, Ltd.**
  **Kyoto-Shi**
  **Kyoto-fu 612-8307 (JP)**
- **Tokyo Electron Limited**
  **Tokyo 107-6325 (JP)**

(72) Inventors:
- **WADA, Hiroo**
  **Kyoto-shi**
  **Kyoto 612-8307 (JP)**

- **TAMURA, Hiroshi**
  **Kyoto-shi**
  **Kyoto 612-8307 (JP)**
- **KOBAYASHI, Hiroshi**
  **Kyoto-shi**
  **Kyoto 612-8307 (JP)**
- **KIYOMOTO, Tomofumi**
  **Amagasaki City**
  **Hyogo 660-0891 (JP)**
- **HONG, Seokhyoung**
  **Amagasaki City**
  **Hyogo 660-0891 (JP)**

(74) Representative: **Menges, Christian Alexander**
**Diehl & Partner GbR**
**Augustenstr. 46**
**80333 München (DE)**

(54) **MICRO-CHANNEL DEVICE AND METHOD FOR FABRICATING MICRO-CHANNEL DEVICE**

(57)    A micro-channel device provided in a solution analysis system using pressure liquid feed comprises a plurality of straight-line channels and curved channels connecting the ends of the neighboring straight-line channels. The width w of each curved channel is smaller than the width t of each straight-line channel. The radius of curvature r of each curved channel is set so that the value of a expressed by formula (1) is equal to or smaller than the value of a at a local maximum point of the theoretical step height H expressed by formula (2) and based on the shape of the curved channel.

$$a = w/r \quad \cdots \cdots (1)$$

$$H = \frac{u_c w^2}{64 \gamma D_m} \times \frac{a^2(a+2)}{a+1} \quad \cdots \cdots (2)$$

Where, w is a width of the curved channel, $u_c$ is a channel passing speed of a solution in the curved channel, $\gamma$ is a molecular diffusion inhibition factor by basic members present in the curved channel, and $D_m$ is a molecular diffusion coefficient of the solution.

EP 2 416 162 A1

# FIG. 2

**Description**

**TECHNICAL FIELD**

The present disclosure relates to a micro-channel device which is provided in a solution analysis system using pressure liquid feed and includes micro-channels including a plurality of straight-line channels and curved channels connecting ends of neighboring straight-line channels, which are formed on a substrate, and a method for fabricating the micro-channel device.

**BACKGROUND ART**

In recent years, micro-channel devices are spreading in their application to scientific fields, including use as media for compact separation analysis, use as a reaction field performing chemical synthesis and biochemical synthesis with high efficiency, etc.

Among these, separation analysis using a micro-channel device includes electrophoresis and electrokinetic chromatography, both of which produce a driving force based on an electric potential generated by applying a voltage to an inlet and an outlet of a micro-channel using electric charges of a sample, which is present in a solution and needs to be separated from the solution, when the sample is transported into the micro-channel. Another separation analysis may include electrochromatography using an electro-osmotic flow generated by electric charges of a contact surface between a micro-channel and a sample.

However, in such separation analyses using an electric field, since substance contained in the sample and to be separated from the sample is transported within the micro-channel, it is required that a transportation solvent filling the micro-channel should be a buffer solution containing inorganic or organic salts and the substance to be separated should have electric charges. That is, the type of substance for separation and analysis is limited. Thus, the fact is that a micro-channel device applied to the separation and analysis is limited in its usage.

On the other hand, liquid chromatography (high performance liquid chromatography) uses a pressure difference produced by a so-called dynamic pump or the like to generate a driving force to feed a solvent to transport substance to be separated. Such liquid chromatography has no limitation to a solvent to transport the substance to be separated, unlike the electrophoresis using an electric field as a liquid feed driving force. An example of this solvent may include a high density organic solvent, water, and a buffer solution containing inorganic or organic salts to establish a wide range of pH conditions. In addition to the type of solvent, irrespective of the presence of electric charges, the substance to be separated may be substances having a wide range of characteristics, including inorganic and organic materials, biomaterials, hydrophilic or hydrophobic materials, and the like. Due to its wide selectivity of these separation and analysis conditions, it is considered that a pressure liquid feed type micro-channel device makes wide contribution to, for example, ultra high speed analysis important for recent scientific research and development, ultra high performance separation required for biotechnologies such as proteomics, metabolomics and so on, processing of mass samples important for industries, and many chemical industries and research such as micro chemistries promising for the next generation chemical industry.

In addition, it has been reported that the principle separation and analysis of a micro-channel device in which micro-fillers are evenly arranged has a performance higher than that of a particle charging type column which is most commonly used (see Non-Patent Document 1). Therefore, it is expected that actual use of the micro-channel device makes great contribution to advances in the chemical fields.

However, up to now, there is no actual report for separation and analysis performance equal to or higher than that of the current liquid chromatographic separation media using a micro-channel device in liquid chromatography using pressure liquid feed.

When a filler type micro-channel device in which micro-fillers are arranged in a micro-channel formed by subjecting a substrate to an etching process is fabricated, a straight long micro-channel may be designed in order to obtain separation performance sufficient to separate a sample. However, under circumstances where the substrate on which the micro-channel is formed has a limit in size and the micro-channel device is required to be compact, there is a need to lengthen the entire channel by forming a plurality of straight-line micro-channels (hereinafter abbreviated as "straight-line channels" folded within a limited area and curved micro-channels (hereinafter abbreviated as "curved channels") connecting these straight-line channels.

However, in the channel where the curved channels connecting the plurality of straight-line channels are designed to have the same width as the straight-line channels, a flow of solution, i.e., a flow of a sample solution, in the curved channels may be disturbed. Such disturbance of the sample solution is attributed to, for example, a speed difference in a flow of the sample solution between inner and outer sides of the curved channels. As a result, without achieving separation and analysis performance expected from the principle performance of a micro-channel constituted by only straight-line channels, the separation and analysis performance of the entire micro-channel including straight-line channels and curved channels significantly deteriorates. This makes it very difficult to achieve a micro-channel device durable enough for actual use.

To overcome this problem, a design has been proposed to use curved channels in a micro-channel device using electrophoresis such that the time for which a sample flows in inner sides of the curved channels connecting straight-line channels is equal to time for which the sample flows in outer sides of the curved channels (see Patent Document 1). In addition, a design has been proposed to use curved channels such that the inner circumference of the curved channel has the same length as the outer circumference of the curved channels (see Patent Document 2).

[Related Technical Document]

[Patent Document]

Japanese Patent Application Publication Patent No. 2001-523001
Patent Document 2: U.S. Patent No. 6,270,641 1

[Non-Patent Document]

Non-Patent Document 1: Analytical Chemistry, Vol. 79, No. 15, August 1, 2007

**SUMMARY OF THE INVENTION**

Use of the micro-channels disclosed in Patent Documents 1 and 2 show that the sample is prevented from being disturbed in the curved channels, thereby improving the separation and analysis performance of the sample for the electrophoresis using an electric field. However, the liquid chromatography using the pressure liquid feed is different in flow of the sample in the micro-channel from the electrophoresis. Therefore, even use of the micro-channels disclosed in Patent Documents 1 and 2 for the liquid chromatography could not lead to fabrication of a micro-channel device having the same separation and analysis performance as the current separation and analysis media since the disturbance of the sample in the curved channels cannot be prevented.

The present disclosure was made in view of the foregoing, and one objective of the present disclosure is to separate and analyze a sample in a solution with high performance while securing a channel length of micro-channels for a micro-channel device using pressure liquid feed.

According to one embodiment of the present disclosure, there is provided a micro-channel device which is provided in a solution analysis system using pressure liquid feed. The device includes micro-channels including a plurality of straight-line channels and curved channels connecting ends of neighboring straight-line channels, which are formed on a substrate, wherein a width of each of the curved channels is smaller than a width of each of the straight-line channels and the radius of curvature r of the curved channel is set such that the value a expressed by the following formula (1) is equal to or smaller than the value of a at the maximum point of a theoretical step height H expressed by the following formula (2) depending on a shape of the curved channel.

[Equation 1]

$$a = w/r \quad \cdot \ \cdot \ \cdot \ \cdot \quad (1)$$

[Equation 2]

$$H = \frac{u_c w^2}{64 \gamma D_m} \times \frac{a^2(a+2)}{a+1} \quad \cdot \ \cdot \ \cdot \ \cdot \quad (2)$$

Where, w is a width of the curved channel, $u_c$ is a channel passing speed of a solution in the curved channel, $\gamma$ is a molecular diffusion inhibition factor by basic members present in the curved channel, and $D_m$ is a molecular diffusion coefficient of the solution.

As a result of careful examination by the present inventors, the above formula (2) for the theoretical step height H depending on the shape of the curved channel has been derived. In addition, it has been found that it is preferable in some embodiments that the width w of the curved channel is set to be small and the radius of curvature r of the curved channel is set to be large in order to separate and analyze the sample in the solution with high performance for the micro-channel device using the pressure liquid feed. That is, it has been found that in some embodiments it is preferable to set the value a expressed by the above formula (1) to be small.

On the other hand, under conditions where the substrate is limited in size, it is preferable to set the width w of the curved channel to be large and the radius of curvature r of the curved channel to be small in order to form the micro-channel as long as possible on the substrate. That is, it is preferable to set the value a expressed by the above formula (1) to be large.

In this manner, there is a trade-off between the width w of the curved channel and the radius of curvature r thereof. From further examination by the present inventors, it has been found that a micro-channel having required performance can be obtained if the value of a expressed by the above formula (1) is equal to or smaller than the value of a at the maximum point of the theoretical step height H in the above formula (2). That is, it has been found that use of the micro-channel satisfying such conditions allows the sample to be separated and analyzed with high performance while securing a length of the micro-channel. The above formula (2) will be described in detail in an embodiment which will be described later.

According to another embodiment of the present disclosure, there is provided a method of fabricating a micro-channel device which is provided in a solution analysis system using pressure liquid feed. The method includes forming micro-channels on a substrate, the micro-channels comprising straight-line channels and curved channels; and connecting ends of neighboring straight-line channels with curved channels, wherein a width of each curved channel is smaller than a width of each straight-line channel and the radius of curvature r of the curved channel is set such that the value of a expressed by the following formula (1) is equal to or smaller than the value of a at the maximum point of a theoretical step height H expressed by the following formula (2) depending on a shape of the curved channel.

[Equation 3]

$$a = w/r \quad \cdot \; \cdot \; \cdot \; \cdot \quad (1)$$

[Equation 4]

$$H = \frac{u_c w^2}{64 \gamma D_m} \times \frac{a^2 (a+2)}{a+1} \quad \cdot \; \cdot \; \cdot \; \cdot \quad (2)$$

Where, w is a width of the curved channel, $u_c$ is a channel passing speed of a solution in the curved channel, $\gamma$ is a molecular diffusion inhibition factor by basic members present in the curved channel, and $D_m$ is a molecular diffusion coefficient of the solution.

According to the embodiments of the present disclosure, the micro-channel device using the pressure liquid feed can separate and analyze the sample in the solution with high performance while securing a length of the micro-channel.

**BRIEF DESCRIPTION OF THE DRAWINGS**

FIG. 1 is a plan view showing a general configuration of a micro-channel device.

**FIG. 2** is a plan view showing a general configuration of a straight-line channel, a connection, and a curved channel.

**FIG. 3** is an explanatory view used to explain setting of inner and outer taper angles of the connection.

**FIG. 4** is another explanatory view used to explain setting of inner and outer taper angles of the connection.

**FIG. 5** is a graph showing a relationship between a curved channel ratio and a theoretical step height.

**FIG. 6** is an explanatory view showing extension of a solute band in a curved channel when the curved channel ratio is smaller than a ratio at the maximum point of the theoretical step height.

**FIG. 7** is an explanatory view showing extension of a solute band in a curved channel when the curved channel ratio is close to a ratio at the maximum point of the theoretical step height.

**FIG. 8** is an explanatory view showing extension of a solute band in a curved channel when the curved channel ratio is larger than a ratio at the maximum point of the theoretical step height.

**FIG. 9** is a graph showing a relationship between a curved channel ratio and a theoretical step height for various widths of the curved channel.

**FIG. 10** is a graph showing a relationship between a curved channel ratio and a theoretical step height for various widths of the curved channel.

[Description of Reference Numerals]

1: Micro-channel device
10: Substrate
20: Micro-channel
21: Straight-line channel
22: Curved channel
23: Inlet hole
24: Outlet hole
25: Connection

**DETAILED DESCRIPTION**

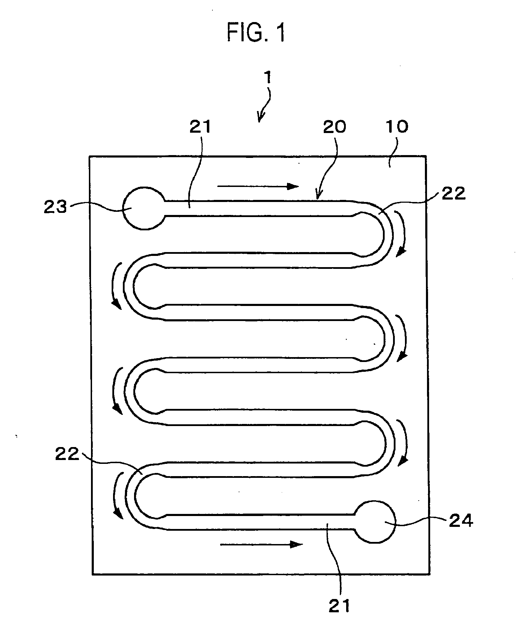

An exemplary embodiment of the present disclosure will now be described in detail with reference to the drawings. **FIG. 1** is a plan view showing a general configuration of a micro-channel device 1 according to this embodiment. The micro-channel device 1 is placed within a high performance liquid chromatography (HPLC) apparatus used as a solution analysis system using pressure liquid feed.

The micro-channel device 1 has a grooved micro-channel 20 formed on a substrate 10. The substrate 10 may be made of, for example, silicon, quartz, polymer, silicon carbide or the like. The substrate is subjected to, for example, photolithography, etching and so on such that a predetermined pattern of micro-channel 20 is formed on the substrate 10.

The micro-channel 20 is provided with, for example, a dynamic pump (not shown). A pressure difference in this dynamic pump allows a solution to be fed into the micro-channel 20.

The micro-channel 20 includes a plurality of straight-line channels 21 formed in parallel when viewed from top, and a plurality of curved channels 22 connecting ends of adjacent straight-line channels 21 and 21. The micro-channel 20 has a meandering form taken by these straight-line channels 21 and curved channels 22 when viewed from top. An inlet hole 23 for introducing a solution into the micro-channel 20 is formed at an end of an entrance side of the micro-channel 20. In addition, an outlet hole 24 for discharging a solution flowing through the micro-channel 20 is formed at an end of an exit side of the micro-channel 20. The micro-channel 20 includes a plurality of micro-fillers (not shown) set up from the bottom of the micro-channel 20. The micro-fillers may be either porous or nonporous. The micro-fillers are formed at the same time when the micro-channel 20 is formed by subjecting the substrate to photolithography, etching or the like, as described above.

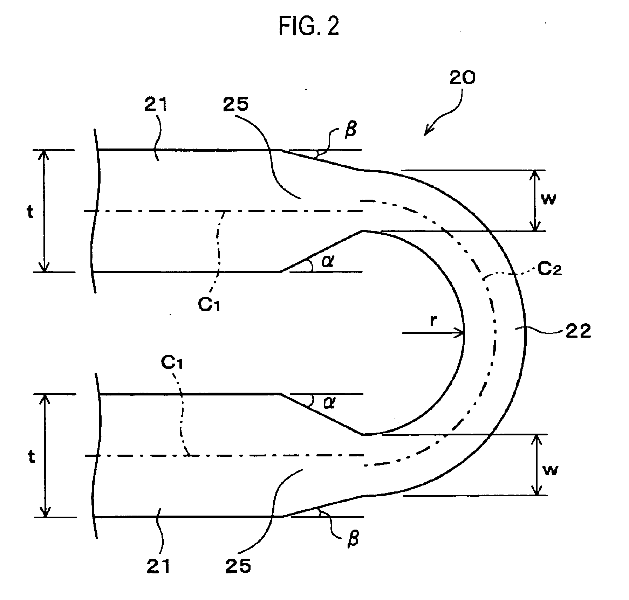

As shown in **FIG. 2**, the width w of each curved channel 22 is smaller than the width t of each straight-line channel 21. This introduces a connection 25 interposed between the straight-line channel 21 and the curved channel 22. The connection 25 is formed in a shape tapered from the straight-line channel 21 to the curved channel 22.

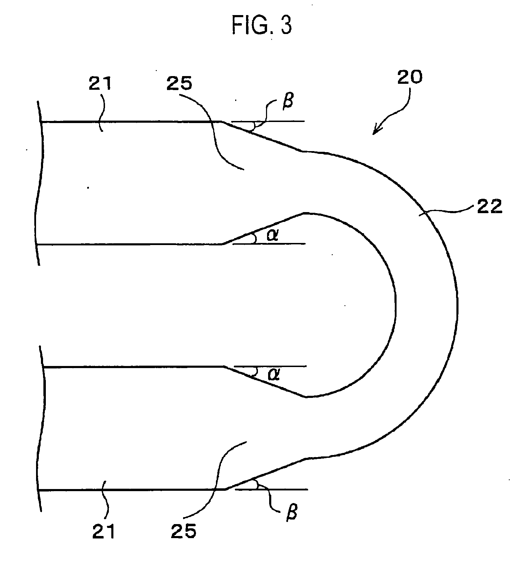

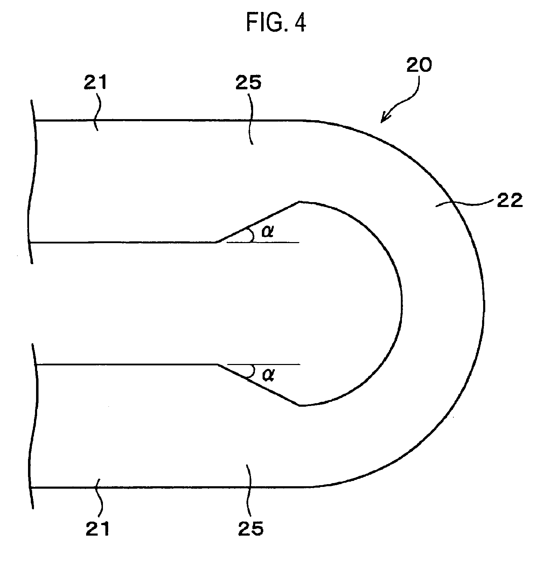

In this embodiment, for example, as shown in **FIG. 3**, it is preferable that the connection 25 is tapered toward the curved channel 22 in symmetry between its inner and outer sides in order to prevent a speed difference between an inner flow of solution and an outer flow of solution from being produced in the connection 25. That is, it is preferable that an inner taper angle $\alpha$ of the connection 25 is equal to its outer taper angle $\beta$. On the other hand, under conditions where the substrate 10 is limited in its size, it is preferable that the width w of the curved channel 22 is made large in order to form the micro-channel 20 as long as possible on the substrate 10. Therefore, for example, as shown in **FIG. 4,** it is preferable that the outer taper angle of the connection 25 is 0. Accordingly, in consideration of the two requirements, the connection 25 is formed such that the inner taper angle $\alpha$ is larger than the outer taper angle $\beta$, as shown in **FIG. 2**. That is, a central line $C_2$ of the curved channel 22 is offset outward with respect to a central line $C_1$ of the straight-line channel 21. In addition, the inner taper angle $\alpha$ and the outer taper angle $\beta$ of the connection 25 are set such that they satisfy the above-mentioned conditions and the radius of curvature r of the curved channel 22 satisfies conditions using the following formulas (1) and (2).

The radius of curvature r of the curved channel 22 is set such that a value of "a" expressed by the following formula (1) is equal to or smaller than a value of "a" at the maximum point of a theoretical step height H depending on a shape of the curved channel 22 in the following formula (2). It is assumed herein that a is a ratio of the width w to the radius of curvature r in the curved channel 22 (hereinafter referred to as "ratio a").

[Equation 5]

$$a = w/r \quad \cdot \ \cdot \ \cdot \ \cdot \quad (1)$$

[Equation 6]

$$H = \frac{u_c w^2}{64\gamma D_m} \times \frac{a^2(a+2)}{a+1} \quad \cdot \ \cdot \ \cdot \ \cdot \quad (2)$$

Where, $u_c$ is a channel passing speed of a solution in the curved channel, $\gamma$ is a molecular diffusion inhibition factor (an effect on molecular diffusion) by basic members (for example, micro-fillers) present in the curved channel, and $D_m$ is a molecular diffusion coefficient of the solution.

Now, the ground for setting the radius of curvature r of the curved channel 22 using the above formulas (1) and (2) will be described.

In a high performance liquid chromatography, a relationship between a channel passing speed (linear speed) u of a solution flowing into a channel by the earlier-described dynamic pump and a load pressure $\Delta P$ applied across a channel unit length is expressed by the following formula (3).

[Equation 7]

$$u = \frac{K\Delta P}{\eta L} \quad \cdot \ \cdot \ \cdot \ \cdot \quad (3)$$

Where, K is a channel penetration ratio, $\eta$ is viscosity of a solvent in a solution and L is a channel length.

If there is no particular change in a size of micro-fillers in the micro-channel 20 and the solvent in the solution, the channel penetration ratio K and the solvent viscosity $\eta$ remain constant. Therefore, assuming that $L_i$ and $L_o$ are inner and outer channel lengths in the curved channel 22, respectively, an inner channel passing speed $u_i$ and an outer channel passing speed $u_o$ in the curved channel 22 are expressed by the following formulas (4) and (5), respectively.

[Equation 8]

$$u_i = \frac{K\Delta P}{\eta L_i} \quad \cdot \ \cdot \ \cdot \ \cdot \quad (4)$$

[Equation 9]

$$u_o = \frac{K\Delta P}{\eta L_o} \quad \cdot \ \cdot \ \cdot \ \cdot \quad (5)$$

In addition, since the inner channel length $L_i$ and the outer channel length $L_o$ in the curved channel 22 are expressed by the following formulas (6) and (7), respectively, a difference $\Delta u_{io}$ between the inner and outer channel passing speeds in the curved channel 22 is expressed by the following formula (8).

[Equation 10]

$$L_i = \theta r \quad \cdot \ \cdot \ \cdot \ \cdot \quad (6)$$

Where, $\theta$ is a curve radian angle of the curved channel 22.

[Equation 11]

$$L_o = \theta(r + w) \quad \cdot \ \cdot \ \cdot \ \cdot \quad (7)$$

[Equation 12]

$$\Delta u_{io} = \frac{\theta w}{\theta^2 r(r + w)} \times \frac{K\Delta P}{\eta} \quad \cdot \ \cdot \ \cdot \ \cdot \quad (8)$$

The difference $\Delta u_{io}$ between the inner and outer channel passing speeds in the curved channel 22, expressed by the above formula (8), is affected by several factors such as the curve radian angle $\theta$ of the curved channel 22, the width w of the curved channel 22, the radius of curvature r of the curved channel 22, etc. This channel passing speed difference $\Delta u_{io}$ expands a solute band of a sample to be separated in the solution in a feed direction of the solution, which results in low separation performance of the micro-channel device 1. In addition, as this channel passing speed

difference $\Delta u_{io}$ is generated in the unit of time, the expansion of the solute band by the channel passing speed difference $\Delta u_{io}$ is accumulated for a period of time longer than the unit of time.

Here, the unit of time in which the channel passing speed difference $\Delta u_{io}$ is generated is expressed by the following formula (9) as time $t_d$ for which molecules of the sample in the solution traverse the curved channel 22 according to a diffusion speed of the sample itself, as disclosed in a document, J. C. Giddings, "Dynamics of Chromatography," pp. 33. In the formula (9), d represents a distance by which the sample molecules travel from the center of the curved channel 22 to its side wall, which corresponds to w/2 in this embodiment. In consideration of an effect of the molecular diffusion inhibition factor $\gamma$ on this formula (9), the time $t_d$ for which the sample molecules traverse the curved channel 22 is expressed by the following formula (10).

[Equation 13]

$$t_d = \frac{d^2}{2D_m} \quad \cdot \cdot \cdot \cdot \quad (9)$$

[Equation 14]

$$t_d = \frac{w^2}{8\gamma D_m} \quad \cdot \cdot \cdot \cdot \quad (10)$$

According to the above formulas (8) and (10), a difference $\Delta L_{io}$ between an inner sample transportation distance and an outer sample transportation distance, which occurs due to the shape of the curved channel 22, is expressed by the following formula (11).

[Equation 15]

$$\Delta L_{io} = \Delta u_{io} t_d = \frac{\theta w^3}{8\gamma D_m \theta^2 r(r+w)} \times \frac{K\Delta P}{\eta} \quad \cdot \cdot \cdot \cdot \quad (11)$$

The sample transportation distance difference $\Delta L_{io}$ in the curved channel 22 is expressed by the following formula (12) as $2\Delta\sigma_c$ which represents an existence distribution of the solute band in the micro-channel device 1. In addition, the channel passing speed $u_c$ in the curved channel 22 and the channel length $L_c$ of the curved channel 22 are expressed by the following formulas (13) and (14), respectively. The following formula (15) is derived from the above formula (11) and the following formulas (12) to (14).

[Equation 16]

$$\Delta L_{io} = 2\Delta\sigma_r \quad \cdot \cdot \cdot \cdot \quad (12)$$

[Equation 17]

$$u_c = \frac{K\Delta P}{\eta L_c} \quad \cdots \cdots (13)$$

[Equation 18]

$$L_c = \theta(r + w/2) \quad \cdots \cdots (14)$$

[Equation 19]

$$2\Delta\sigma_c = \frac{u_c w^3 (2r + w)}{16\gamma D_m r(r + w)} \quad \cdots \cdots (15)$$

Expansion of the solute band due to the shape of the curved channel 22 is obtained by integrating the expansion of the solute band at the time $t_d$ by an amount of time by which the sample passes the curved channel 22. The number of integration n is expressed by the following formula (16) which represents a ratio of the outer channel length $L_o$ of the curved channel 22 to a distance $u_c t_d$ by which the sample is transported at the time $t_d$.
[Equation 20]

$$n = \frac{L_o}{u_c t_d} = \frac{8\gamma D_m \theta(r + w)}{u_c w^2} \quad \cdots \cdots (16)$$

As the expansion of the solute band in the high performance liquid chromatography is expressed by the following formula (17) as $\sigma^2$, the expansion of the solute band in the micro-channel device 1 is $n(\Delta\sigma_c)^2$ in this embodiment.. The theoretical step height H representing the separation performance of the micro-channel device 1 is expressed by a ratio of the solute band expansion $\sigma^2$ to a channel length L corresponding to a transportation distance of the solute band, that is, $\sigma^2/L$. Since a transportation distance of the solute band in the curved channel 22, that is, the channel length $L_c$ of the curved channel 22, is expressed by the above formula (14) as $\theta(r+w/2)$, the theoretical step height H depending on the shape of the curved channel 22 is expressed by the following formula (18).
[Equation 21]

$$\sigma^2 = \frac{8\theta u_c w^4 (2r+w)^2}{32^2 \gamma D_m r^2 (r+w)} \quad \cdot \cdot \cdot \cdot \quad (17)$$

[Equation 22]

$$H = \frac{\sigma^2}{L_c} = \frac{u_c w^4 (2r+w)}{64\gamma D_m r^2 (r+w)} \quad \cdot \cdot \cdot \cdot \quad (18)$$

Here, from the above formula (18), the above formula (2) is obtained if a is assumed to be w/r, as shown in the above formula (1). This is a theoretical step height H which is produced when the sample passes the curved channel 22 having the radius of curvature r and is added to a theoretical step height provided by the straight-line channel 21, which is the primary factor to deteriorate the entire separation performance of the micro-channel 20. As can be seen from the formula (2), the separation performance is not affected by the curve radian angle θ of the curved channel 22.

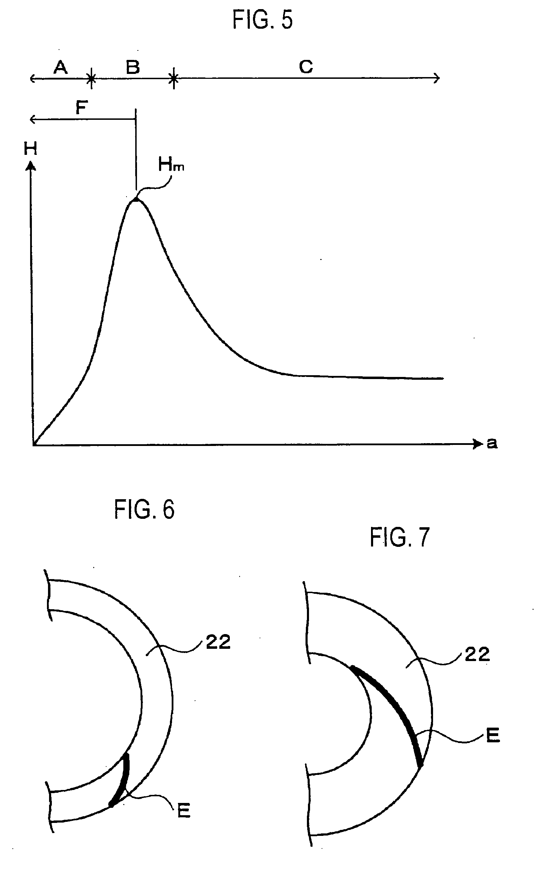

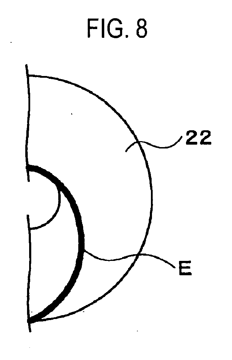

FIG. 5 is a graph showing a relationship between the ratio a expressed by the formula (1) and the theoretical step height H expressed by the formula (2). In the graph of FIG. 5, a range A where the ratio a is smaller than a ratio a at the maximum point $H_m$ of the theoretical step height H provides smaller expansion E of the solute band in the curved channel 22, as shown in FIG. 6. On the other hand, in the graph of FIG. 5, a range B where the ratio a is close to a ratio a at the maximum point $H_m$ of the theoretical step height H provides larger expansion E of the solute band in the curved channel 22, as shown in FIG. 7. In addition, in the graph of FIG. 5, in a range C where the ratio a is larger than a ratio a at the maximum point $H_m$ of the theoretical step height H, the theoretical step height H becomes smaller than the maximum point $H_m$. However, this is just an apparent decrease of the theoretical step height H since the channel length L of the micro-channel 20 increases in the range C. In actuality, the expansion E of the solute band in the curved channel 22 increases in the range B, as shown in FIG. 8.

Here, in order to separate and analyze the sample in the solution with high performance, it is preferable that the theoretical step height H depending on the shape of the curved channel 22 is small, that is, the expansion E of the solute band is small, as described above. Accordingly, in order to separate and analyze the sample with high performance, the radius of curvature r of the curved channel 22 is set such that the ratio a expressed by the formula (1) is equal to or smaller than a ratio a at the maximum point $H_m$ of the theoretical step height H (expressed by the formula (2)) depending on the shape of the curved channel 22 (that is, falls within a range F in FIG. 5).

The substrate 10 of the micro-channel device 1 is limited in its size. In order to separate and analyze as many samples as possible under such limitation, it is preferable in some embodiments to increase the width w of the curved channel 22, lengthen the straight-line channel 21 and decrease the radius of curvature r of the curved channel 22. That is, it is preferable to increase the ratio a expressed by the formula (1). Accordingly, the radius of curvature r of the curved channel 22 is set such that the ratio a is equal to a ratio a at the maximum point $H_m$ of the theoretical step height H depending on the shape of the curved channel 22.

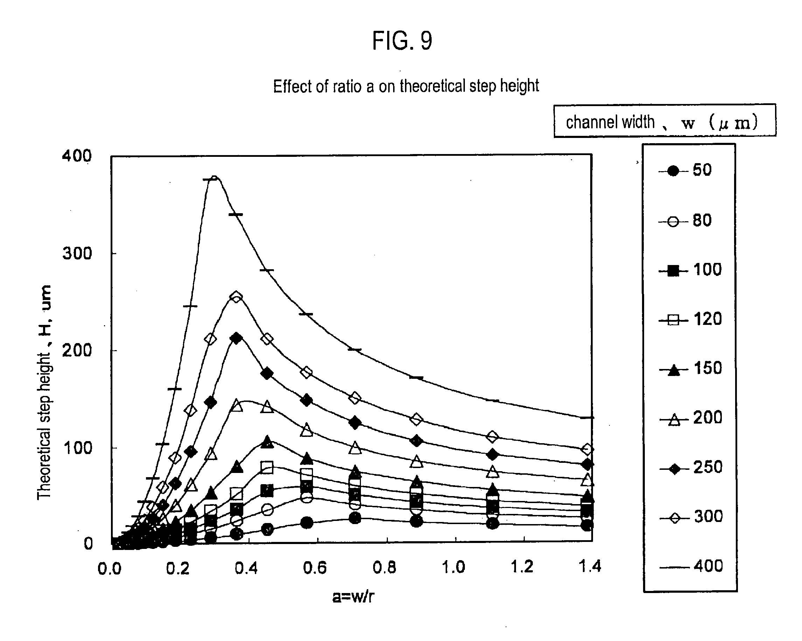

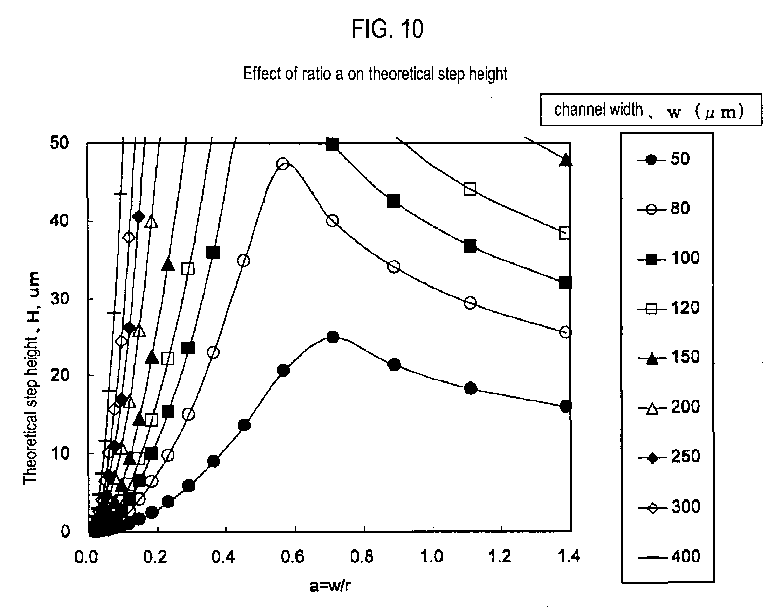

Next, how to design the curved channel 22 will be described in detail. FIG. 9 and FIG. 10 are graphs showing a relationship between the ratio a and the theoretical step height H for various widths of the curved channel 22.

First, the theoretical step height H depending on the shape of the curved channel 22 is set based on required performance of the micro-channel device 1. The theoretical step height H in some embodiments is preferably 0.1 μm to 100 μm, more preferably 1 μm to 10 μm.

Then, the radius of curvature r and the width w of the curved channel 22 are set to be equal to or smaller than the set theoretical step height H such that the ratio a is equal to or smaller than a ratio a at the maximum point $H_m$ of the theoretical step height H, with reference to FIG. 9 and FIG. 10. In such a case, a graph showing that the maximum point $H_m$ of the theoretical step height H matches the set theoretical step height H is selected and the radius of curvature r and the width w of the curved channel 22 are set based on the selected graph.

In addition, the width w of the curved channel 22 is set to be smaller than the width t of the straight-line channel 21. From a careful evaluation by the inventors, it has been found that it is preferable in some embodiments to set the radius of curvature r of the curved channel 22 to, for example, 100 $\mu$m to 5000 $\mu$m and set the width w of the curved channel 22 to, for example, 10 $\mu$m to 800 $\mu$m.

In addition, the connection 25 connecting the curved channel 22 and the straight-line channel 21 is set such that the inner taper angle $\alpha$ is larger than the outer taper angle $\beta$ while satisfying the above-mentioned setting conditions of the curved channel 22.

Once the micro-channel 20 including the curved channel 22, the straight-line channel 21 and the connection 25 is designed in the above-described manner, the substrate 10 is subjected to photolithography and etching based on the design. Thus, the micro-channel 20 is formed on the substrate 10, thereby completing the micro-channel device 1.

According to the above-described embodiment, since the radius of curvature r and the width w of the curved channel 22 are set such that the ratio a expressed by the formula (1) is equal to or smaller than a ratio a at the maximum point $H_m$ of the theoretical step height H expressed by the formula (2), it is possible to prevent a flow of solution from being disturbed due to the shape of the curved channel 22. That is, it is possible to achieve the micro-channel 20 having required performance and separate and analyze a sample contained in a solution in the micro-channel device 1 having the micro-channel 20 with high performance.

In addition, the channel length L of the micro-channel 20 can be secured when a ratio a is set to be as large as possible within the above range of ratio a. In particular, a larger channel length L of the micro-channel 20 can be secured when the ratio a is set to be equal to a ratio a at the maximum point $H_m$ of the theoretical step height H.

According to this embodiment, it is possible to separate and analyze a sample with high performance while securing the channel length L of the micro-channel 20.

In addition, since the connection 25 provided between the straight-line channel 21 and the curved channel 22 is tapered such that the inner taper angle $\alpha$ is larger than the outer taper angle $\beta$, it is possible to secure the width w of the curved channel 22 and increase the channel length of the micro-channel 20 while preventing a speed difference between an inner flow of solution and an outer flow of solution from being produced in the connection 25.

In addition, since the substrate 10 is made of, for example, silicon, quartz, organic polymer, silicon carbide or the like, the micro-channel 20 can be formed on the substrate 10 through photolithography, etching and so on. This makes it possible to form the micro-channel 20 into a desired shape with high precision while easily forming it in a batch manner.

Although it has been illustrated in the above embodiment that the micro-channel device 1 is installed in the high performance liquid chromatography analysis system, the present disclosure is not limited thereto as long as the analysis system uses pressure liquid feed. For example, the micro-channel device 1 may be installed in a micro-reactor analysis system 1. As used herein, a micro-reactor refers to a microscopic reaction vessel having a micro-channel, and is mainly used for chemical synthesis and biochemical synthesis. Micronization of a reaction system using the micro-reactor can achieve fast and highly-efficient reaction in addition to saved resources and energy.

While certain embodiments have been described, these embodiments have been presented by way of example only, and are not intended to limit the scope of the disclosures. Indeed, the novel methods and apparatuses described herein may be embodied in a variety of other forms; furthermore, various omissions, substitutions and changes in the form of the embodiments described herein may be made without departing from the disclosures. The accompanying claims and their equivalents are intended to cover such forms or modifications as would fall within the scope of the disclosures.

The present disclosure is useful for a micro-channel device which is provided in a solution analysis system using pressure liquid feed and includes micro-channels including a plurality of straight-line channels and curved channels connecting ends of neighboring straight-line channels, which are formed on a substrate.

**Claims**

1. A micro-channel device which is provided in a solution analysis system using pressure liquid feed, the micro channel device comprising:

   micro-channels including a plurality of straight-line channels and curved channels connecting ends of neighboring straight-line channels, which are formed on a substrate, wherein a width of each curved channel is smaller than a width of each straight-line channel and the radius of curvature r of the curved channel is set such that the value of a expressed by the following formula (1) is equal to or smaller than the value of a at the maximum point of a theoretical step height H expressed by the following formula (2) depending on a shape of the curved channel.

[Equation 23]

$$a = w/r \quad \cdot \quad \cdot \quad \cdot \quad \cdot \quad (1)$$

[Equation 24]

$$H = \frac{u_c w^2}{64 \gamma D_m} \times \frac{a^2(a+2)}{a+1} \quad \cdot \quad \cdot \quad \cdot \quad (2)$$

Where, w is a width of the curved channel, $u_c$ is a channel passing speed of a solution in the curved channel, $\gamma$ is a molecular diffusion inhibition factor by basic members present in the curved channel, and $D_m$ is a molecular diffusion coefficient of the solution.

2. The micro-channel device of Claim 1, further comprising a connection provided between the straight-line channel and the curved channel,
the connection being formed in a shape tapered from the straight-line channel to the curved channel, and
an inner taper angle of the connection is larger than an outer taper angle of the connection.

3. The micro-channel device of Claim 1, wherein the radius of curvature r of the curved channel is set based on the value of a at the maximum of the theoretical step height H expressed by the formula (2) depending on the shape of the curved channel.

4. The micro-channel device of Claim 1, wherein the analysis system is high performance liquid chromatography or a micro-reactor.

5. The micro-channel device of Claim 1, wherein the micro-channel is made of silicon, quartz, organic polymer or silicon carbide.

6. The micro-channel device of Claim 1, wherein the theoretical step height H depending on the shape of the curved channel is 0.1 $\mu$m to 100 $\mu$m.

7. The micro-channel device of Claim 6, wherein the theoretical step height H depending on the shape of the curved channel is 1 $\mu$m to 10 $\mu$m.

8. The micro-channel device of Claim 6, wherein the radius of curvature r of the curved channel is 100 $\mu$m to 5000 $\mu$m and the width w of the curved channel is 10 $\mu$m to 800 $\mu$m.

9. The micro-channel device of Claim 1, wherein the micro-channel has a meandering form taken by the straight-line channel and the curved channel when viewed from the top.

10. A method of fabricating a micro-channel device which is provided in a solution analysis system using pressure liquid feed, the method comprising:

forming micro-channels on a substrate, the micro-channels comprising straight-line channels and curved channels; and
connecting ends of neighboring straight-line channels with curved channels, wherein a width of each curved channel is smaller than a width of each straight-line channel and the radius of curvature r of the curved channel is set such that the value of a expressed by the following formula (1) is equal to or smaller than the value of a at the maximum point of a theoretical step height H expressed by the following formula (2) depending on a shape of the curved channel.

[Equation 25]

$$a = w/r \quad \cdot \quad \cdot \quad \cdot \quad \cdot \quad (1)$$

[Equation 26]

$$H = \frac{u_c w^2}{64 \gamma D_m} \times \frac{a^2(a+2)}{a+1} \quad \cdot \quad \cdot \quad \cdot \quad \cdot \quad (2)$$

Where, w is a width of the curved channel, $u_c$ is a channel passing speed of a solution in the curved channel, $\gamma$ is a molecular diffusion inhibition factor by basic members present in the curved channel, and $D_m$ is a molecular diffusion coefficient of the solution.

11. The method of Claim 10, wherein the radius of curvature r of the curved channel is set based on the value of a at the maximum of the theoretical step height H expressed by the formula (2) depending on the shape of the curved channel.

FIG. 1

## FIG. 2

FIG. 3

## FIG. 4

FIG. 5

FIG. 6

FIG. 7

FIG. 8

## FIG. 9

Effect of ratio a on theoretical step height

EP 2 416 162 A1

EP 2 416 162 A1

## FIG. 10

Effect of ratio a on theoretical step height

channel width 、 w （μm）
- ● 50
- ○ 80
- ■ 100
- □ 120
- ▲ 150
- △ 200
- ◆ 250
- ◇ 300
- — 400

## INTERNATIONAL SEARCH REPORT

| International application No. |
|---|
| PCT/JP2010/055561 |

### A. CLASSIFICATION OF SUBJECT MATTER
*G01N35/08*(2006.01)i, *B01J19/00*(2006.01)i, *B81B1/00*(2006.01)i, *G01N30/26*(2006.01)i, *G01N37/00*(2006.01)i

According to International Patent Classification (IPC) or to both national classification and IPC

### B. FIELDS SEARCHED

Minimum documentation searched (classification system followed by classification symbols)
G01N35/08, B01J19/00, B81B1/00, G01N30/26, G01N37/00

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2002-536662 A (The Regents of the University of California),<br>29 October 2002 (29.10.2002),<br>paragraphs [0026] to [0029]; fig. 6<br>& US 6913679 B1    & EP 1151290 A<br>& WO 2000/047985 A1   & AU 2964000 A<br>& CA 2361718 A | 1,2,4-11<br>3 |
| X<br>A | US 6270641 B1 (Griffiths et al.),<br>07 August 2001 (07.08.2001),<br>column 11, line 57 to column 13, line 23;<br>fig. 6<br>& EP 1177432 A    & WO 2000/065337 A1<br>& AU 4973300 A | 1,2,4-11<br>3 |

☒ Further documents are listed in the continuation of Box C.     ☐ See patent family annex.

| | |
|---|---|
| *   Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>24 May, 2010 (24.05.10) | Date of mailing of the international search report<br>01 June, 2010 (01.06.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/055561

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2008-298619 A  (Tokyo Electron Ltd. et al.), 11 December 2008 (11.12.2008), entire text; all drawings (Family: none) | 1-11 |

Form PCT/ISA/210 (continuation of second sheet) (July 2009)

**EP 2 416 162 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001523001 A

- US 62706411 B

**Non-patent literature cited in the description**

- *Analytical Chemistry,* 01 August 2007, vol. 79 (15